Europäisches Patentamt

(19) European Patent Office

Office européen des brevets

(11) Numéro de publication: **0 003 690**
**A1**

(12) **DEMANDE DE BREVET EUROPEEN**

(21) Numéro de dépôt: 79400034.9

(22) Date de dépôt: 17.01.79

(51) Int. Cl.²: **A 47 J 37/07**

(30) Priorité: 02.02.78 FR 7802933

(71) Demandeur: **Société dite: Le Creuset, F-02230 Fresnoy Le Grand (FR)**

(43) Date de publication de la demande: **22.08.79 Bulletin 79/17**

(72) Inventeur: **Schmitt, Paul, 6, Les Grives, F-78170 La Celle St Cloud (FR)**

(74) Mandataire: **Polus, Camille et al, c/o Cabinet Lavoix 2, Place d'Estienne d'Orves, F-75441 Paris Cedex 09 (FR)**

(84) Etats contractants désignés: **DE NL**

(54) **Barbecue roulant.**

㉗ Le barbecue représenté comporte une ossature en forme de brouette composée de deux châssis A, B, articulés l'un à l'autre en 6. Deux foyers 12, 13 sont montés sur le châssis arrière B, à l'emplacement du dossier et du fond de brouette. En exerçant une poussée vers le bas sur l'extrémité libre des brancards 2, les deux châssis A et B pivotent l'un par rapport à l'autre jusque dans une position pour laquelle l'extrémité 2a du brancard est appuyée sur le sol, les deux châssis faisant alors un angle aigu avec orientation horizontale du foyer 12. Le foyer 13 peut lui-même être placé à l'horizontale en le faisant basculer au moyen de la poignée 24 autour de l'articulation constituée par la traverse avant 22 du châssis B.

EP 0 003 690 A1

1

Barbecue roulant.-

————————

L'invention a pour objet un barbecue comportant au moins un foyer, qui est monté sur une ossature munie de moyens de roulement, de brancards et de pieds sustentateurs, et qui est capable d'occuper deux positions de travail décalées angulairement, dont l'une est une position verticale ou légèrement inclinée sur la verticale pour l'utilisation en rôtissoire du foyer, et dont l'autre est une position approximativement horizontale pour l'utilisation en grilloir du foyer.

De tels barbecues ont déjà été réalisés selon des modalités diverses, par exemple sous la forme de poussettes, charrettes, voitures de quatre saisons.

Le but de l'invention est de proposer un barbecue du type mentionné, de construction rationnelle et attrayante et offrant de larges possibilités d'utilisation.

Ce barbecue est caractérisé en ce que l'ossature forme une brouette pliante, qui comporte un châssis avant constitué par les brancards et les pieds sustentateurs, qui est articulé de telle sorte sur un châssis arrière supportant le foyer, que l'ossature peut prendre deux positions stables correspondant aux positions de travail respectives du foyer, dont l'une est une position déployée conforme à la disposition normale d'une brouette, et dont l'autre est une position pliée pour laquelle le châssis avant repose sur le sol, non seulement par ses pieds mais encore par l'extrémité libre des brancards, le châssis arrière étant alors dans une position fortement inclinée, définie par le contact avec le sol de la roue équipant ce châssis.

L'agencement proposé offre l'avantage d'une infrastructure légère et élégante permettant un transport facile. La configuration en brouette conduit naturellement à placer deux foyers distincts sur le châssis arrière à l'emplacement, l'un du dossier, l'autre du fond, pour la position déployée de l'ossature, ces deux foyers étant alors utilisables respectivement comme rôtissoire et comme grilloir. Dans la position pliée de l'ossature, pour laquelle le châssis arrière a une position oblique, les deux foyers, qui sont avantageusement articulés en des points espacés de ce châssis, peuvent être, avec des moyens simples, disposés et retenus à l'horizontale pour être utilisés comme grilloirs, dans des positions décalées à la fois verticalement et horizontalement, tout en restant à bonne hauteur, en donnant ainsi une excellente accessibilité.

L'invention sera explicitée au cours de la description qui va suivre, en se référant au dessin annexé, dans lequel :

- la Fig. 1 est une vue en élévation du barbecue, pour la position déployée en brouette de son ossature;

- la Fig. 2 est une vue en perspective correspondante, avec arrachements;

- la Fig. 3 est une vue en élévation, pour la position pliée de l'ossature, les deux foyers étant horizontaux;

- la Fig. 4 est une vue partielle correspondant à la figure 3, montrant le deuxième foyer en position oblique, rentré dans le châssis arrière;

- la Fig. 5 est une vue de détail montrant le cadre du premier foyer.

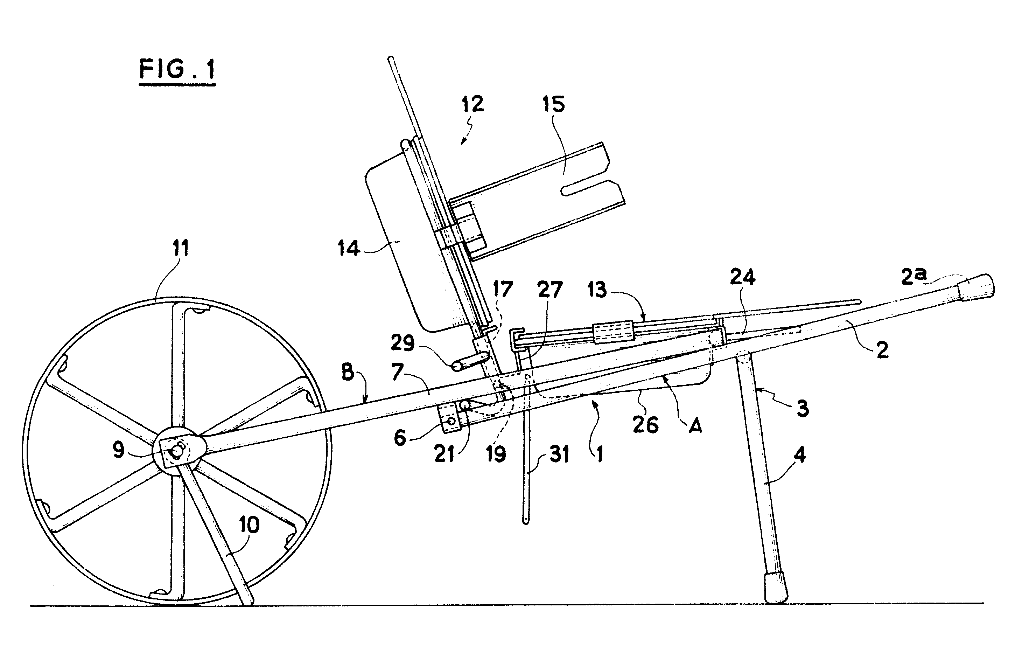

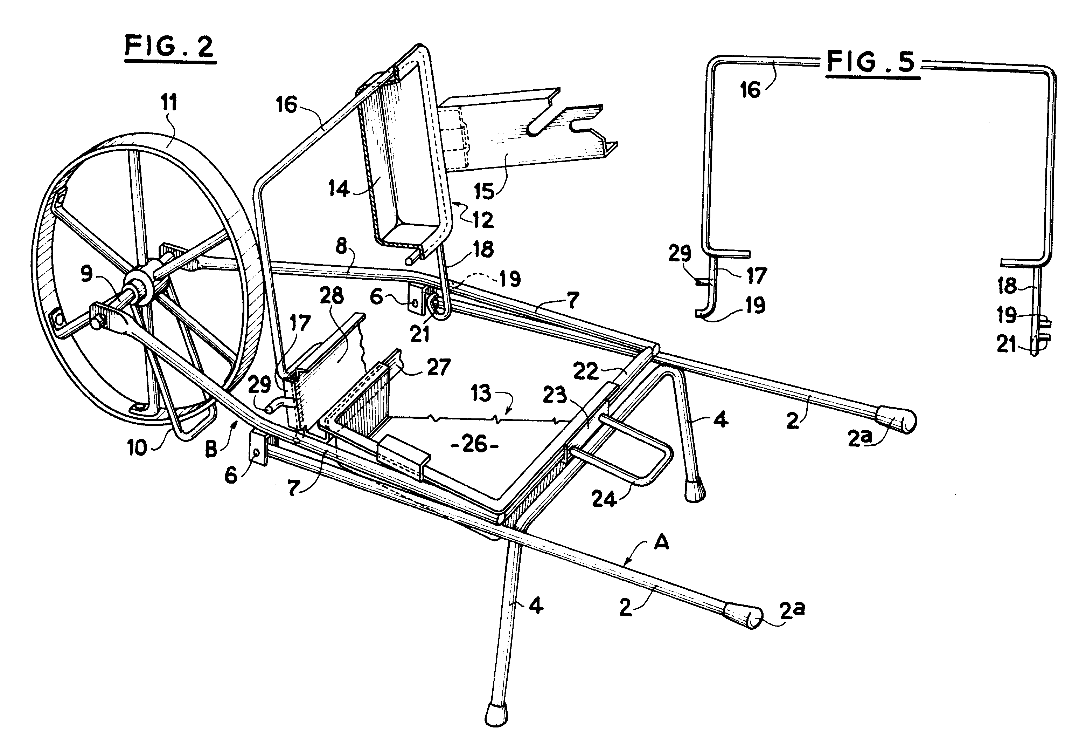

L'ossature du barbecue représenté aux figures 1 et 2 constitue une brouette dont les brancards 2, soudés à la partie haute d'un arceau trapézoïdal 3 qui définit deux pieds sustentateurs 4, forment avec ces derniers un châssis avant A articulé, au moyen d'axes 6, dans la partie centrale

3

d'un châssis arrière B qui comporte deux longerons parallèles 7 se rétrécissant vers l'arrière en formant une fourche 8 à l'extrémité libre de laquelle est monté un axe 9 sur lequel tourillonne une roue 11.

A l'emplacement du dossier et du fond de brouette sont montés, sur le châssis arrière B, respectivement un foyer principal 12, utilisable comme rôtissoire, et un foyer auxiliaire 13, utilisable comme grilloir.

Le bac 14, muni d'un porte-broche 15, du foyer 12 est emboîté dans un cadre-support 16 formé d'une barre pliée en rectangle et qui se prolonge vers le bas sous la forme de deux tiges latérales 17, 18, comportant chacune un doigt horizontal 19 orienté vers l'extérieur, qui est engagé dans un orifice correspondant des longerons 7. Ces deux doigts définissent pour le foyer 12 un axe d'articulation situé en avant des axes 6 reliant l'un à l'autre les deux châssis. Le foyer 12 est retenu dans la position représentée, légèrement inclinée par rapport à la verticale, au moyen d'une patte coudée 21, formée à l'extrémité de la tige 18 et appuyée sur le brancard 2 correspondant.

Quant au deuxième foyer, 13, il est également articulé sur le châssis arrière autour d'un axe matérialisé par une traverse cylindrique 22 qui réunit les longerons 7 à leur extrémité avant et autour duquel est emboîtée une ferrure centrale en caisson 23, munie d'une poignée 24, du bac 26 du foyer 13, dont l'extrémité arrière repose sur un rebord 27 d'une plaque 28 s'étendant entre les tiges 17, 18 du foyer 12.

Dans la position déployée de l'ossature 1 représentée aux figures 1 et 2, le châssis arrière B est solidarisé par gravité avec le châssis avant A, de sorte que l'ensemble peut être déplacé comme une brouette. L'arceau de freinage 10, suspendu de façon pendulaire à l'axe 9, est normalement basculé en avant de ce dernier, c'est-à-dire occupe une position inactive.

4

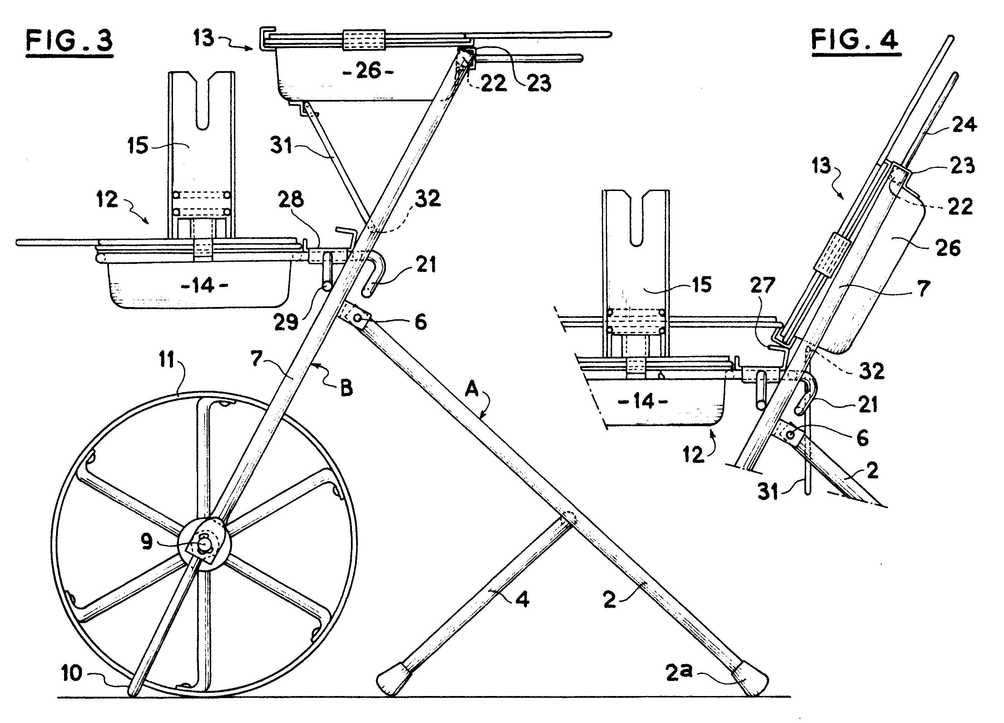

Il est toutefois possible de plier l'ossature 1 pour donner au barbecue une deuxième position stable, représentée à la figure 3, en exerçant sur l'extrémité libre des brancards 2 une poussée vers le bas, qui astreint les deux châssis A, B à pivoter l'un par rapport à l'autre. Au cours de ce mouvement les axes d'articulation 6 sont soulevés, la roue 11 est tout d'abord elle-même soulevée par rapport au sol, de sorte que, par une course pendulaire, l'arceau de freinage 10 passe à l'arrière de l'axe 9, puis la roue reprend contact avec le sol au moment où le centre de gravité du châssis arrière franchit les axes 6. Le foyer 12 bascule d'un certain angle autour de ses axes de montage 19, jusqu'à ce que la butée 29 prévue sur la tige 17 du foyer 12 vienne au contact du longeron 7 correspondant et rende le foyer solidaire en rotation du châssis B dont la position finale est obtenue au moment où l'extrémité 2a des brancards 2 est en appui sur le sol.

Dans cette position le foyer 12 est horizontal (Fig. 3), le foyer 13 restant rentré entre les longerons 7 dans une position oblique (Fig. 4). Il est alors possible, en exerçant une poussée vers le bas sur la poignée 24, de faire tourner autour de l'articulation 22 le foyer 13 et de l'immobiliser en position horizontale (Fig. 3), au moyen d'une jambe de force 31 en forme d'arceau, articulée en 32 sur les longerons 7. Les deux foyers peuvent alors être utilisés comme grilloirs.

Dans la position de la figure 3 la stabilité du barbecue est renforcée par l'action de freinage de l'arceau 10 arc-bouté sur le sol.

On peut évidemment faire passer le barbecue de la position de la figure 3 à la position de la figure 1, après avoir dégagé la jambe de force 31 en relevant les brancards 2.

1

## REVENDICATIONS

1 - Barbecue comportant au moins un foyer qui est monté sur une ossature munie de moyens de roulement, de brancards et de pieds sustentateurs, et qui est capable d'occuper deux positions de travail décalées angulairement, dont l'une est une position verticale ou légèrement inclinée sur la verticale pour l'utilisation en rôtissoire du foyer, et dont l'autre est une position approximativement horizontale pour l'utilisation en grilloir du foyer, caractérisé en ce que l'ossature forme une brouette pliante qui comporte un châssis avant (A) constitué par les brancards (2) et les pieds sustentateurs (4), qui est articulé (6) de telle sorte sur un châssis arrière (B) supportant le foyer (12), que l'ossature peut prendre deux positions stables correspondant aux positions de travail respectives du foyer, dont l'une est une position déployée conforme à la disposition normale d'une brouette, et dont l'autre est une position pliée pour laquelle le châssis (A) avant repose sur le sol, non seulement par ses pieds (4) mais encore par l'extrémité libre (2a) des brancards (2), le châssis arrière (B) étant alors dans une position fortement inclinée, définie par le contact avec le sol de la roue (11) équipant ce châssis.

2 - Barbecue suivant la revendication 1, caractérisé en ce que l'articulation (6) reliant les deux châssis (A, B) est située dans la région médiane du châssis arrière (B) dont l'extrémité avant prend appui par gravité, pour la position déployée de l'ossature, sur le châssis avant (A).

3 - Barbecue suivant l'une des revendications 1 et 2, caractérisé en ce que le foyer (12), ou l'un des foyers, est articulé (19) sur le châssis arrière (B), et des moyens (21, 29) sont prévus pour retenir le foyer dans ses deux positions de travail.

4 - Barbecue suivant la revendication 3, caractérisé en ce que l'articulation (19) du foyer (12) sur le châssis arrière est située en avant de l'articulation (6) reliant les deux châssis.

5 - Barbecue suivant l'une des revendications 3 et 4, caractérisé en ce que le foyer (12) est retenu, pour la position déployée de l'ossature, dans une position oblique correspondant au dossier de la brouette, au moyen d'une patte coudée (21) solidaire du foyer, qui prend appui sur le châssis avant (A).

6 - Barbecue suivant l'une des revendications 3 à 5, caractérisé en ce qu'il est prévu un deuxième foyer (13) articulé (22) sur le châssis arrière (B), au voisinage de l'extrémité avant de ce dernier.

7 - Barbecue suivant la revendication 6, caractérisé en ce que le deuxième foyer (13) est retenu par gravité dans une position horizontale, ou peu différente de l'horizontale, pour la position déployée de l'ossature.

8 - Barbecue suivant la revendication 7, caractérisé en ce que le deuxième foyer peut être retenu dans une position horizontale pour la position pliée de l'ossature, au moyen d'un support escamotable (31) porté par le châssis arrière.

9 - Barbecue suivant l'une des revendications 1 à 8, caractérisé par un étrier (10) suspendu de façon pendulaire sur l'axe de roue (9) et jouant le rôle d'un frein.

FIG. 1

0003690

FIG.2

FIG.5

2/3

0003690

0003690

FIG. 4

FIG. 3

Office européen
des brevets

**RAPPORT DE RECHERCHE EUROPEENNE**

0003690

Numéro de la demande

EP 79 40 0034

| Catégorie | Citation du document avec indication, en cas de besoin, des parties pertinentes | Revendication concernée | |
|---|---|---|---|
| | US - A - 3 297 016 (RHODES) <br> * Figures 2 et 3 * | 1,2,3, 5 | |
| | US - A - 3 008 463 (FRANK) <br> * Figures 1 et 2 * | 1,2,3 | |
| | US - A - 3 147 748 (FRANK) <br> * Figures 1 et 2 | 1,2,3 | |
| | US - A - 2 484 239 (MOON et al.) <br> * Figures 1 et 6 * | 1,2,3 | |
| | US - A - 2 994 315 (BUSSING) <br> * Figures 8,9 * | 1 | |
| | US - A - 3 389 651 (SCHULTZ) <br> * Figures 1,8,11 * | 1,6 | |

**DOCUMENTS CONSIDERES COMME PERTINENTS**

**CLASSEMENT DE LA DEMANDE (Int. Cl.²)**

A 47 J 37/07

**DOMAINES TECHNIQUES RECHERCHES (Int. Cl.²)**

A 47 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-05-1979 | SCHARTZ |

OEB Form 1503.1  06.78